# EUROPEAN PATENT APPLICATION

(11) **EP 4 437 916 A1**
(43) Date of publication of application: **02.10.2024**
(21) Application number: 24166868.0
(22) Date of filing: 27.03.2024
(51) Int. Cl.: A47J 36/24

(54) **HEATING DEVICE AND HEATING METHOD THEREOF**

(30) Priority: 31.03.2023 IT 202300006246
(71) Applicant: Pagliarini, Marco, 46100 Mantova (IT)
(72) Inventor: Pagliarini, Marco, 46100 Mantova (IT)
(74) Representative: Leganza, Alessandro

(57) **Abstract**

The present invention relates to a heating device for at least one food product arranged within said heating device.

## Description

The present invention relates to a heating device.

The present invention relates, further, to a method for heating.

Preferably, the heating object of the present invention relates to heating at least one food product arranged within the heating device.

The term food product, for the present invention, means any food product in any state such as liquid, solid, semi-solid or semi-liquid.

As is well known, in recent years, scientific and technological development in the field of thermal devices (heating devices and/or thermal containers) for food has been oriented towards the development of techniques and/or products to keep food warm inside these thermal devices and, if necessary, to heat the food in these thermal devices.

For example, food heating devices are known in which a foodstuff is placed inside a container body of said heating device in order to preserve its heat (having been previously cooked) . In the event that the user decides to consume said foodstuff at a later time, said foodstuff may need to be reheated in order to restore optimal organoleptic characteristics. In such cases, said devices are configured to heat the food product contained within said devices, typically by means of electric heating.

Such devices have several drawbacks.

A first drawback is the fact that such devices are typically powered by electricity supplied by an electrical system (e.g. of the type found in any type of building) through connection with an electrical cable (e.g. by inserting said electrical cable with an electrical plug and plugging it into an electrical outlet of said electrical system); this makes such devices unusable for heating purposes if an electrical system for the supply of electricity is not available or not accessible, severely limiting their versatility/possibility of use.

A second drawback is that such devices, once electrically powered, proceed with the electric heating of said foodstuff, without the possibility of regulating the heating of said foodstuff. This makes them difficult to use, and undermines the optimal heating result of the foodstuff itself.

A third drawback is that such devices have a bulky structure, which makes them difficult to transport.

The aim of the present invention is to provide a device for heating at least one foodstuff which ensures high versatility of use, optimal heating and high transportability.

Further, it is an object of the present invention to provide a method for heating at least one food product which provides high versatility, optimal heating and ease of execution.

According to the present invention, a device for heating at least one food product, as defined in claim 1, is realised. For a better understanding of the present invention, a preferred embodiment is now described, by way of describing example only, with reference to the accompanying drawings, wherein:

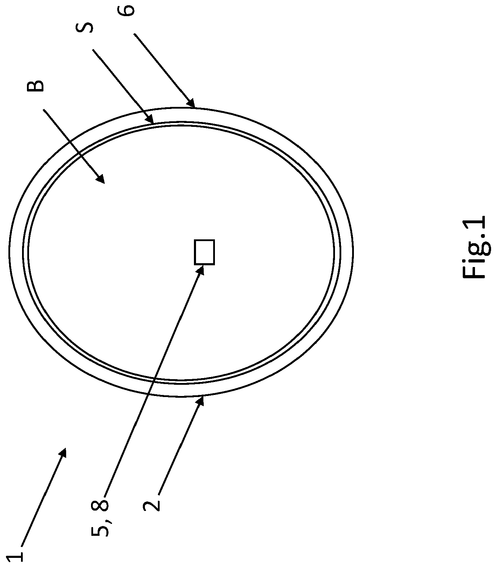

- figure 1 shows a schematic top view of a device for heating at least one food product according to the invention;

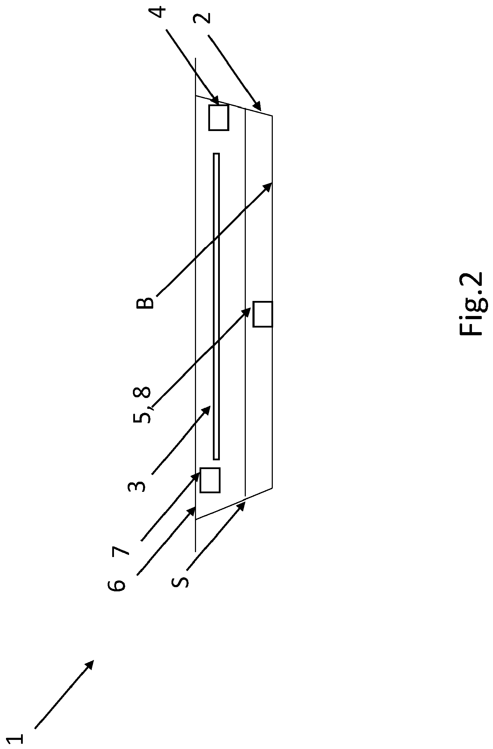

- Figure 2 shows a schematic side view of a device for heating at least one food product, according to the invention.

The device 1 for heating the at least one foodstuff, arranged within the device 1, comprises at least one container body 2 configured to contain said at least one foodstuff to be heated.

Preferably, said at least one container body 2 is configured to retain the heat of a food product previously heated by means of said device 1 or by means of another heating means.

Preferably, said device 1 comprises at least one electrical heating element 3 arranged internally to said at least one container body 2.

In particular, said at least one heating element 3 may be inserted (substantially embedded) at least partially within one or more portions of the matrix of said at least one container body 2.

Preferably, said at least one controller element 4 is arranged internally to said at least one housing body 2.

Advantageously, said at least one controller element 4 is configured to activate/deactivate said at least one heating element 3.

Preferably, said at least one controller element 4 can be inserted (substantially embedded) at least partially within one or more matrix portions of said at least one container body 2.

Preferably, said device 1 comprises at least one accumulator 5 configured to electrically power said at least one heating element 3.

Advantageously, said at least one accumulator 5 is arranged in a respective housing of said at least one container body 2.

Preferably, said at least one accumulator 5 is removable from said respective housing into which it is insertable. Thus, once the charge is exhausted, it is possible to easily replace said at least one exhausted accumulator 5 with said at least one charged accumulator 5 to electrically power said at least one heating element 3.

Even more advantageously, said respective housing is inserted (substantially embedded) at least partially within one or more portions of the matrix of said housing body 2.

Said characteristics derive from the experimental tests carried out by the Applicant, in which the Applicant tried different alternative solutions, in order to identify the solution that best ensured high versatility of use, optimal heating and high transportability.

In particular, the device 1 so configured can be used for heating food products even in case of lack/accessibility of an electrical power source external to the device 1, achieving a high versatility/possibility of use. Furthermore, the device 1 so configured ensures a high ease of use and obtaining an optimal heating result for the food product. Furthermore, the device 1 so configured presents a compact structure, ensuring ease of transport of the device 1 itself.

In detail, with respect to the known art, one of the advantages of the device 1 of the present invention is represented by the presence of said at least one electrical heating element 3 arranged internally, at least partially, to said at least one container body 2. This makes it possible to compact the structure of said device 1, as an external heating element would increase the total footprint of said device 1; furthermore, this makes it possible to obtain optimal heating of the foodstuff, as the at least partial internal arrangement of said at least one heating element 3 (as opposed to an external heating element) makes it possible to obtain homogeneous heating of said at least one container body 2.

Furthermore, the presence of said at least one regulating element 4 allows to activate/deactivate said at least one heating element 3, so that the user can adjust the heating of said foodstuff at will. Furthermore, the at least partially internal arrangement of said at least one regulating element 4 to said at least one container body 2 contributes to compacting the dimensions of the device 1.

In addition, the presence of said at least one accumulator 5, which is configured to electrically power said at least one heating element 3, makes said device 1 usable for heating food products also in case of lack/accessibility of an electrical energy source external to said device 1 itself, achieving a high versatility/possibility of use.

Furthermore, the internal arrangement of said at least one heating element 5 in a respective housing, which is arranged at least partially within said at least one housing body 2, contributes to compacting the dimensions of the device 1.

In detail, said at least one heating element 3 is electrically connected to said at least one regulating element 4 and to said at least one accumulator 5. In this way, said at least one regulating element 4 performs its function of activating/deactivating said at least one heating element 3 and, likewise, said at least one accumulator 5 performs its function of electrically supplying said at least one heating element 3.

According to a further aspect of the invention, said device 1 comprises at least one lid 6 configured to engage with a respective container body 2 and define an opening position and a closing position of said device 1. In other words, said at least one lid 6 is removable from said at least one container body 2.

Said feature makes it possible to preserve the heat of an already heated foodstuff (by means of the device 1 or by means of another heating means) arranged within said at least one container body 2 and further makes it possible to optimise the heating of said foodstuff, as the heat generated is confined between said at least one lid 6 and a respective container body 2.

According to a preferred embodiment, said at least one lid 6 is configured to engage with said respective container body 2 in such a manner as to make said device 1 hermetic in said closed position. In other words, said at least one lid 6 is removable from said at least one container body 2 and, when defining a closure position for said at least one container body 2, the closure is substantially hermetic (i.e. each container body 2 and a respective lid 6 form a sealed body).

Said characteristic makes it possible to preserve the heat of an already heated foodstuff (by means of the device 1 or by means of another heating means) arranged within said at least one container body 2, and further makes it possible to maximise the heating of said foodstuff, since the heat generated is hermetically confined between said at least one lid 6 and a respective container body 2, without therefore dispersing heat with the external environment.

According to a more preferred form of implementation, said device 1 is essentially a heating plate.

According to a more preferred form of implementation, said device 1 is a heating plate.

Said conformation makes it possible to ensure a compact structure for said device 1, thereby achieving high transportability for said device 1 itself.

According to a further aspect of the invention, said device 1 comprises at least one control and command element 7 of a respective heating element 3.

Advantageously, said at least one control and command element 7 is configured to detect the temperature of a respective heating element 3 and activate/deactivate a respective heating element 3.

In detail, said at least one control and command element 7 is electrically connected to each respective heating element 3.

In other words, said at least one control and command element 7 is configured to autonomously detect the temperature of a respective heating element 3. If said sensed temperature is lower or higher than a predetermined value (set from time to time, for example, by a user, or set as a non-modifiable set point), said at least one control and command element 7 is configured to respectively activate or deactivate a respective heating element 3.

Said feature further contributes to optimising the heating of said at least one foodstuff using said device 1.

Preferably, said at least one control and command element 7 is arranged internally to said at least one container body 2.

In particular, said at least one control and command element 7 may be inserted (substantially embedded) at least partially within one or more portions of the matrix of said at least one container body 2.

According to a preferred form of implementation, said at least one control and command element 7 comprises a thermostat of any type.

Even more preferably, said at least one control and command element 7 is a thermostat. Said thermostat is then configured to detect the temperature of a respective heating element 3 and activate/deactivate a respective heating element 3.

According to a further aspect of the invention, said at least one heating element 3 comprises at least one electrical resistance of any type.

Even more preferably, said at least one heating element 3 is an electrical resistance. Said electrical resistance provides a compact structure for said device 1 and is configured to generate homogeneous and sufficient heat for heating said at least one food product disposed within said at least one container body 2.

According to a further aspect of the invention, said at least one regulating element 4 comprises at least one electrical ON/OFF switch.

According to a preferred embodiment, said at least one regulating element 4 is an electrical switch of the ON/OFF type. In other words, through interaction with said switch, a user has the possibility of switching a respective heating element 3 on and off at will and in a simple manner; said solution also contributes to making the device 1 even smaller in size.

According to a further aspect of the invention, said at least one accumulator 5 comprises at least one electric battery 8.

According to a preferred form of implementation, said at least one accumulator 5 is an electric battery 8. Said at least one electric battery 8 provides a compact structure for said device 1 and is configured to supply an amount of electric energy sufficient to generate sufficient heat for heating said at least one food product disposed within said at least one container body 2.

According to a further aspect of the invention, said at least one container body 2 has at least one base B and at least one upper portion S overlying said at least one base B.

According to a preferred embodiment, said at least one electrical heating element 3 is arranged internally to said at least one container body 2 and at least part of said at least one upper portion S. Such an arrangement enables homogeneous heating of said at least one food product.

Advantageously, said at least one base B and said at least one upper portion S are made of a material comprising stainless steel.

Said feature ensures a high service life for said device 1, as said material allows for a higher resistance to thermal and/or mechanical stress for said at least one container body 2.

Even more preferably, said at least one upper portion S comprises a ceramic coating deposited on said material comprising stainless steel. Said ceramic coating confers, to said at least one container body 2, a higher resistance to thermal and/or mechanical stresses (further increasing the lifetime of said device 1) and further confers a thermal insulation useful to make the heating of said at least one foodstuff disposed in said device 1 even more homogeneous.

According to a preferred form of implementation, said at least one regulating element 4 is disposed internally to said at least one container body 2 and in correspondence with said at least one portion of said at least one upper portion S. Said configuration allows to hermetically seal said at least one regulating element 4, making it inaccessible to possible penetrations of water, in order to be able to insert said device 1 in a dishwasher for washing thereof.

According to a preferred form of implementation, said respective housing (for said at least one accumulator 5) is arranged at least partially within said at least one container body 2 and in correspondence with a lower portion of said device 1, preferably in correspondence with said at least one base B. Such an arrangement contributes in making the structure of said device 1 even more compact.

According to a further aspect of the invention, the method for heating said at least one food product by means of a device 1 as described, comprises a step of arranging said at least one food product to be heated within said at least one container body 2.

Preferably, said method comprises a step of activating/deactivating said at least one heating element 3 electrically by means of said at least one regulating element 4.

Preferably, said at least one accumulator 5 is configured to electrically power said at least one heating element 3.

Said characteristics are derived from the experimental tests carried out by the Applicant, in which the Applicant tried different alternative solutions, in order to identify the solution that best ensured a high versatility of use, optimal heating and a high simplicity of execution.

In particular, the method so configured can be used for heating food products also in case of lack/accessibility of an external power source to the device 1, achieving a high versatility/possibility of use. Furthermore, the method so configured ensures a high simplicity of execution and obtaining an optimal heating result for the food product.

In detail, with respect to the known art, one of the advantages of the method of the present invention is represented by the step of activating/deactivating said at least one heating element 3, by means of said at least one regulating element 4, so that the user can regulate the heating of said food product at will.

Furthermore, the possibility of electrically powering said at least one heating element 3, by means of said at least one accumulator 5, makes said method usable for heating food products also in case of lack/accessibility of an electrical energy source external to the device 1 itself, achieving a high versatility/possibility of use.

In detail, said at least one heating element 3 is electrically connected to said at least one regulating element 4 and to said at least one accumulator 5. In this way, said at least one regulating element 4 performs its function of activating/deactivating said at least one heating element 3 and, similarly, said at least one accumulator 5 performs its function of electrically supplying said at least one heating element 3.

It finally becomes clear that modifications and variations can be made to the device for heating the at least one food product and to the heating method thereof, described and illustrated herein, without thereby departing from the scope of protection of the present invention, as defined in the appended claims.

## Claims

1. Device (1) for heating at least one food product arranged inside the device (1), said device (1) comprising:
- at least one container body (2) shaped to contain said at least one food product to be heated;
- at least one electric heating element (3) arranged inside said at least one container body (2);
- at least one regulating element (4) arranged inside said at least one container body (2), said at least one regulating element (4) being configured to activate/deactivate said at least one heating element (3);
- at least one accumulator (5) configured to electrically power said at least one heating element (3), said at least one accumulator (5) being arranged in a respective housing, which is arranged at least partially inside said at least one container body (2).

2. Device according to claim 1, wherein the device (1) comprises at least one lid (6) configured to engage with a respective container body (2) and define an open position and a closed position of said device (1).

3. Device according to one or more of the preceding claims, wherein said device (1) is substantially a heating plate.

4. Device according to one or more of the preceding claims, wherein said device (1) comprises at least one control and command element (7) of a respective heating element (3), said at least one control and command element (7) being configured for detect the temperature of a respective heating element (3) and activate/deactivate a respective heating element (3).

5. Device according to one or more of the preceding claims, wherein said at least one heating element (3) comprises at least one electric resistance.

6. Device according to one or more of the preceding claims, wherein said at least one regulating element (4) comprises at least one ON/OFF electric switch.

7. Device according to one or more of the preceding claims, wherein said at least one accumulator (5) comprises at least one electric battery (8).

8. Device according to one or more of the preceding claims, wherein said at least one container body (2) has at least one base (B) and at least one upper portion (S) overlying said at least one base (B), said at least one base (B) and said at least one upper portion (S) being made of a material comprising stainless steel.

9. Device according to claim 8, wherein said at least one upper portion (S) comprises a ceramic coating applied on said material comprising stainless steel.

10. Method for heating at least one food product by means of a device (1) according to one or more of the preceding claims, said method comprising the following steps:
- arranging said at least one food product to be heated inside said at least one container body (2);
- Activating/deactivating said at least one electric heating element (3) by means of said at least one regulating element (4), said at least one accumulator (5) being configured to electrically power said at least one heating element (3).
